# EUROPEAN PATENT SPECIFICATION

(11) **EP 3 757 903 B1**
(45) Date of publication and mention of the grant of the patent: **19.02.2025**
(21) Application number: 19182515.7
(22) Date of filing: 26.06.2019
(51) Int. Cl.: G06N 3/0464, G06N 3/09, G06N 5/01, G06N 3/126, G06N 3/048

(54) **OPTIMIZING GEOMETRY OF PHYSICAL STRUCTURE USING NEURAL NETWORK**
OPTIMIERUNG DER GEOMETRIE EINER PHYSIKALISCHEN STRUKTUR UNTER VERWENDUNG EINES NEURONALEN NETZES
OPTIMISATION DE LA GÉOMÉTRIE D'UNE STRUCTURE PHYSIQUE AU MOYEN D'UN RÉSEAU NEURONAL

(43) Date of publication of application: 30.12.2020
(73) Proprietor: Robert Bosch GmbH, 70442 Stuttgart (DE)
(72) Inventor: Flore, Dominik, 70435 Stuttgart (DE)

(56) References cited:
- ZHENGUO NIE ET AL: "Stress Field Prediction in Cantilevered Structures Using Convolutional Neural Networks", ARXIV.ORG, CORNELL UNIVERSITY LIBRARY, 201 OLIN LIBRARY CORNELL UNIVERSITY ITHACA, NY 14853, 12 June 2019 (2019-06-12), XP081368128
- SERGIO D. CARDOZO ET AL: "Optimization of laminated composite plates and shells using genetic algorithms, neural networks and finite elements", LATIN AMERICAN JOURNAL OF SOLIDS AND STRUCTURES, vol. 8, no. 4, 1 January 2011 (2011-01-01), pages 413 - 427, XP055652888, DOI: 10.1590/S1679-78252011000400003
- DOMINIK FLORE: "Experimentelle Untersuchung und Modellierung des Schädigungsverhaltens faserverstärkter Kunststoffe unter thermomechanischer Langzeitbeanspruchung", 1 January 2017 (2017-01-01), XP055652822, ISBN: 978-3-906327-76-1, Retrieved from the Internet <URL:https://www.research-collection.ethz.ch/bitstream/handle/20.500.11850/167255/457027-1_inhalt.pdf?sequence=1&isAllowed=y> [retrieved on 20191211], DOI: 10.3929/ethz-b-000167255
- ARNOUX PIERRE-HADRIEN ET AL: "Modeling Finite-Element Constraint to Run an Electrical Machine Design Optimization Using Machine Learning", IEEE TRANSACTIONS ON MAGNETICS, IEEE SERVICE CENTER, NEW YORK, NY, US, vol. 51, no. 3, 1 March 2015 (2015-03-01), pages 1 - 4, XP011579491, ISSN: 0018-9464, [retrieved on 20150423], DOI: 10.1109/TMAG.2014.2364031
- KONONENKO O ET AL: "Machine Learning and Finite Element Method for Physical Systems Modeling", ARXIV.ORG, CORNELL UNIVERSITY LIBRARY, 201 OLIN LIBRARY CORNELL UNIVERSITY ITHACA, NY 14853, 22 January 2018 (2018-01-22), XP081222611
- DOMINIK FLORE ET AL: "Influence of fibre volume fraction and temperature on fatigue life of glass fibre reinforced plastics", AIMS MATERIALS SCIENCE, 1 July 2016 (2016-07-01), XP055652840, Retrieved from the Internet <URL:https://www.research-collection.ethz.ch/bitstream/handle/20.500.11850/118796/eth-49470-01.pdf?sequence=1&isAllowed=y> [retrieved on 20191213]
- KAREN SIMONYAN ET AL: "Very Deep Convolutional Networks for Large-Scale Image Recognition", ICLR 2015, 4 September 2014 (2014-09-04), pages 1 - 14, XP055555399
- HE KAIMING ET AL: "Deep Residual Learning for Image Recognition", 2016 IEEE CONFERENCE ON COMPUTER VISION AND PATTERN RECOGNITION (CVPR), IEEE, 27 June 2016 (2016-06-27), pages 770 - 778, XP033021254, DOI: 10.1109/CVPR.2016.90
- SPRUEGEL TOBIAS ; ET AL: "GENERIC APPROACH TO PLAUSIBILITY CHECKS FOR STRUCTURAL MECHANICS WITH DEEP LEARNING", 25 August 2017 (2017-08-25), pages 299 - 308, XP093133146, ISBN: 978-1-904670-89-6, Retrieved from the Internet <URL:https://www.designsociety.org/publication/39529/Generic+approach+to+plausibility+checks+for+structural+mechanics+with+deep+learning> [retrieved on 20240220]

## Description

### FIELD OF THE INVENTION

The invention relates to a system and computer-implemented method for optimizing a geometry of a physical structure with respect to at least one performance metric. The invention further relates to a system and computer-implemented method for training a neural network for use in optimizing the geometry of the physical structure with respect to the performance metric. The invention further relates to a computer-readable medium comprising the trained neural network, and to a computer-readable medium comprising instructions to cause a processor system to perform one of said methods.

### BACKGROUND OF THE INVENTION

It is often desired to optimize a geometry of a physical structure, e.g., when designing such a physical structure using a Computer-Aided Design (CAD) process.

For example, when designing an electrical machine, such as an electrical motor or an electrical generator, it may be desirable to optimize the geometry of the rotor of the electrical machine with respect to one or more objectives.

The optimization with respect to such objectives may involve evaluating one or more performance metrics to obtain one or more quantitative measures based on which the geometry of the physical structure may be optimized. For example, such a performance metric may provide a numerical approximation of a physical quantity or a quantity which is derived from one or more physical quantities. The optimization with respect to multiple of such objectives simultaneously is also known as multi-objective optimization.

Methods for optimizing a geometry of a physical structure are known per se. For example, in sizing optimization, a parametric geometry template may be used to establish variations in the geometry of a physical structure, e.g., by varying the scalar geometry parameters of the parametric geometry template, and to evaluate different variants of the geometry, for example using the Finite Element Method (FEM). The objectives of the FEM simulations may then be used in an optimization algorithm whose goal is to identify an optimal design of the geometry in as few attempts as possible. For example, genetic algorithms or gradient-based algorithms may be used as optimization algorithm.

A drawback of such known types of optimizations is that they may be computationally expensive, e.g., requiring computation times in the range of weeks or months. A reason for this is that known optimization algorithms are typically are unable to use prior knowledge, e.g., from past optimizations, to accelerate a current optimizatior Document ZHENGUO NIE et al.: "Stress Field Prediction in Cantilevered Structures Using Convolutional Neural Networks", ARXIV.ORG, 12.6.2019, discloses the use of CNNs for mechanical stress field prediction in cantilevered structures. Document SERGIO D. CARDOZO et al.: "Optimization of laminated composite plates and shells using genetic algorithms, neural networks and finite elements", LATIN AMERICAN JOURNAL OF SOLIDS AND STRUCTURES, vol. 8, no. 4, 1.1.2011, discloses the optimization of composite plates using genetic algorithms and neural networks. Document DOMINIK FLORE: "Experimentelle Untersuchung und Modellierung des Schadigungsverhaltens faserverstarkter Kunststoffe unter thermomechanischer Langzeitbeanspruchung", 1.1.2017, discloses discusses a solution approach for predicting the damage state of a rotor disc in an electrical machine using finite element analysis and damage modeling.

### SUMMARY OF THE INVENTION

It would be desirable to enable an optimization of the geometry of a physical structure to take prior knowledge into account. The following measures provide a neural network which may be trained to incorporate such prior knowledge, and which may be used during an optimization of the geometry of a physical structure to infer values of performance metrics, thereby greatly reducing the computational complexity of the optimization compared to having to compute such performance metric values via FEM or similar methods.

In accordance with a first aspect of the invention, a computer-implemented method and a system are provided for training a neural network for use in optimizing a geometry of a physical structure with respect to at least one performance metric, as defined by claim 1 and 11, respectively. In accordance with a further aspect of the invention, a computer-implemented method and a system are provided for optimizing a geometry of a physical structure with respect to at least one performance metric, as defined by claim 7 and 12, respectively. In accordance with a further aspect of the invention, a computer-readable medium is provided as defined by claim 10.

The above measures provide a neural network which is trained using training data which comprises a plurality of training instances representing different geometries of the physical structure and associated values of at least one performance metric. The training instances may represent prior knowledge of the relationship between the geometry of the physical structure and the performance metric, and may be obtained from past optimizations and/or from measurements of physical embodiments of the physical structure or elsewhere.

A possible approach to training the neural network may be to consider the scalar geometry parameters from the sizing optimization as input to the neural network, the values of the performance metric(s) as a desired output of the neural network, and to use a machine learning regression method to learn the relationship between input and output and thereby train the neural network to infer the value of the performance metric(s) based on the scalar geometry parameters of a physical structure of which the geometry is to be optimized.

However, the topology of parts of the physical structure often changes for a new optimization problem, and thereby also the number and/or the type of scalar geometry parameters. This makes it difficult or even impossible to merge the scalar geometry parameters across different optimization problems. Accordingly, the training and subsequent use of a neural network may be limited to optimization problems associated with one parametric geometry template, i.e., to one set of scalar geometry parameters.

To address this problem, the above described aspects of the invention provide measures which learn the relationship between the geometry of the physical structure and the values of the performance metric from a pictorial representation of the geometry. Here, the adjective 'pictorial' refers to an image-based representation, such as a representation as one or more 2D raster ('bitmap') images comprised of pixels, or a 3D volumetric image comprised of voxels. Such a pictorial representation is more flexible than a set of scalar geometry parameters, as it may represent any geometrical variation which is discernible in the pictorial representation, compared to a set of scalar geometry parameters which may be limited to representing only those geometric variations which are representable by the set of scalar geometry parameters.

The neural network may be trained using such pictorial representations, and which may be obtained in various ways, e.g., by converting a geometric representation, such as a CAD model or the aforementioned parametric geometry template, into a pictorial representation, or by scanning an actual prototype of the physical structure, etc.

Having trained the neural network, the trained neural network may be used during optimization of a geometry of a same type of physical structure to infer a value of the at least one performance metric in a computationally efficient manner. Namely, during the optimization process, a pictorial representation of the current geometry may be generated and used as input to the trained neural network to infer the value(s) of the performance metric(s). Having obtained the inferred value(s), the geometry of the physical structure may then be (further) optimized, e.g., in a manner as known per se, e.g., using a genetic algorithm or a gradient-based optimization. It is noted that during such an optimization process, the geometry of the physical structure may be stored as computer-readable data, e.g., in the form of the aforementioned parametric geometry template, a CAD model, etc.

The above measures may replace the FE method or similar methods, which may otherwise be used to determine values of performance metrics for a geometric representation of a physical structure, by a trained neural network. The inference using a trained neural network is typically much more computationally efficient than the use of the FE method. In addition, the use of a trained neural network which is specifically trained on a pictorial representation of the physical structure provides additional flexibility compared to the use of a neural network which is trained on only scalar geometry parameters. Advantageously, the computation times for optimizing the geometry of a physical structure may be greatly reduced, for example to the order of several milliseconds or microseconds.

Optionally, each training instance further comprises one or more scalar parameters associated with the physical structure represented by the training instance, and the neural network further comprises a concatenation layer for receiving an output of the plurality of convolutional layers and the one or more scalar parameters as input and for providing a concatenated output to the plurality of dense layers. There may be aspects of the physical structure which may play a role in the optimization of the geometry of the physical structure but which may be more efficiently represented by one or more scalar parameters rather than by a pictorial representation, and/or which may not be discernible in a pictorial representation of the physical structure. To enable such parameters to be encoded as prior knowledge in the neural network, and to enable the inference of performance metric values based on such parameters, the neural network may provide an input for the scalar parameters during training and subsequent use, i.e., inference, namely in the form of a concatenation layer which concatenates the output of the convolutional layers with the scalar input parameters and feeds the concatenated output further, e.g., to dense layer(s) of the neural network.

Optionally, the training method further comprises:
- obtaining geometric representations of the different geometries of the physical structure; and
- generating the pictorial representation of the respective geometry of the physical structure from a respective geometric representation.

The different geometries of the physical structure on which the training is based may not all be available as a pictorial representation, but some may rather only be available as a geometric representation, e.g., as a parametric geometry template, a CAD model, etc. Accordingly, as an initial step of the training or before the training, the geometric representations may be converted into corresponding pictorial representations.

Optionally, generating the pictorial representations from the geometric representations comprises:
- generating a 2D image from a 2D geometric representation of a geometry of the physical structure; or
- generating a 3D volumetric image or a 3D multiview image from a 3D geometric representation of a geometry of the physical structure.

Several types of pictorial representations have been found to be suitable to be used as input to a neural network, such as 2D images, 3D volumetric images and 3D multiview images. It is noted that a 3D multiview image may be represented by a series of 2D images, as is known per se in the art. Moreover, the dimensionality of the pictorial representation may be the same dimensionality as the geometric representation, e.g., a 3D CAD model may be represented as a 3D volumetric image, but may also be lower, e.g., if a 2D image suffices for training purposes.

Optionally, generating the pictorial representations from the geometric representations comprises:
- obtaining a material indication of at least a part of the physical structure; and
- encoding the material indication as a pictorial value of the at least part of the physical structure in the pictorial representation.

The pictorial representation typically comprises pictorial values, e.g., image values in the case of raster or volumetric images, or may be assigned pictorial values, e.g., in the case of point clouds. Such pictorial values may be assigned not only to represent the geometry of the physical structure, e.g., by having pictorial values representing the physical structure (e.g., '0') which are different from pictorial values representing the surroundings of the physical structure (e.g. '2' denoting 'air'), but may also be assigned in such a way so as to encode local properties of the physical structure, such as a material. Thereby, different materials of the physical structure may be identified (e.g., '0' for sheet metal, '1' for magnet), both for the training instances and for input instances for the inference, which may increase the specificity with which the trained neural network may infer performance metric values.

Optionally, the physical structure is a part of an electrical machine. For example, the physical structure may be a rotor of the electrical machine.

Optionally, the one or more scalar parameters comprise at least one of a group of: a scalar design parameter of the part of the electrical machine, and a characterization of a geometry of another part of the electrical machine.

Non-limiting examples for scalar design parameters of an electrical machine include material properties, such as Young's modulus and magnetic remanence, loads such as current, voltage, speed, and geometric parameters such as an axial length.

An example of a characterization of another part of the electrical machine is the following: the pictorial representation may show a rotor (or a rotor section), as the rotor geometry may vary greatly depending on the application. In contrast, the stator geometry may be less variable across applications, and any variability may rather be expressed by one or a limited number of scalar values. Using one or a limited number of scalar parameters may be more efficient than using a pictorial representation if the variability of the geometry can be sufficiently represented by such scalar parameter(s).

Optionally, the optimization method further comprises iteratively optimizing the geometry of the physical structure by, in an iteration of said iterative optimization, generating the pictorial representation from the optimized geometry of the physical structure which is obtained in a previous iteration of the iterative optimization.

It will be appreciated by those skilled in the art that two or more of the above-mentioned embodiments, implementations, and/or optional aspects of the invention may be combined in any way deemed useful.

Modifications and variations of any system, any computer-implemented method or any computer-readable medium, which correspond to the described modifications and variations of another one of said entities, can be carried out by a person skilled in the art on the basis of the present description.

### BRIEF DESCRIPTION OF THE DRAWINGS

These and other aspects of the invention will be apparent from and elucidated further with reference to the embodiments described by way of example in the following description and with reference to the accompanying drawings, in which
Fig. 1 shows a geometry template for sizing optimization of an electrical machine with a single-V rotor topology;
Figs. 2A-2C show different rotor topologies for an electrical machine;
Fig. 3 illustrates the conversion of a 2D geometric representation of a rotor sector into a pictorial representation in the form of a 2D image;
Fig. 4 illustrates a neural network configured to receive a pictorial representation and scalar parameters as input, and to output performance metric values;
Fig. 5 illustrates the use of the trained neural network in the iterative optimization of a geometry of a rotor sector;
Fig. 6 shows a 2D point cloud representation of a rotor sector;
Fig. 7 illustrates the conversion of a 3D geometric representation of a physical structure into a pictorial representation in the form of a 3D voxel representation;
Figs. 8A-8B illustrate 2D image representations of rotors in which different winding topologies, with and without pitch shortening, are encoded as different image values;
Fig. 9 shows a system for training a neural network for use in optimizing a geometry of a physical structure with respect to at least one performance metric;
Fig. 10 shows a system for optimizing a geometry of a physical structure with respect to at least one performance metric using a trained neural network; and
Fig. 11 shows a computer-readable medium comprising data.

It should be noted that the figures are purely diagrammatic and not drawn to scale. In the figures, elements which correspond to elements already described may have the same reference numerals.

### List of reference numbers

The following list of reference numbers is provided for facilitating the interpretation of the drawings and shall not be construed as limiting the claims.
- 10: geometry template
- 20A-20L: scalar parameters

- 30: rotor with single V topology
- 31: rotor with double V topology
- 32: rotor with VC design topology
- 40: magnet
- 41: magnet pocket

- 50,51: geometric representation of rotor sector

- 60-62: 2D image representation of rotor sector
- 60-x: x-dimension of 2D image representation
- 60-y: y-dimension of 2D image representation
- 65: zoomed-in portion of 2D image representation
- 70: 2D point cloud representation of rotor

- 71: point cloud part representing metal sheet
- 72: point cloud part representing magnets

- 80: 3D voxel representation of physical structure

- 90,91: 2D image representation of rotor
- 95: winding topology encoded as image values
- 96: winding topology with pitch shortening encoded as image values

- 100,101: neural network
- 110: value(s) of performance metric(s)
- II: image input
- SI: scalar input
- SP: scalar parameter(s)
- C1-C5: convolutional layer
- F: flattening
- CC: concatenating layer
- D1-D3: dense layer
- O: output
- OP1: optimizer 1
- OP2: optimizer 2

- 200: generate geometric representation
- 210: generate 2D image as pictorial representation
- 220: use as input to neural network

- 300: system for training neural network for design optimization
- 320: input-output interface
- 340: data storage
- 342: training data comprising training instances
- 344: data defining (trained) neural network
- 360: processor subsystem

- 400: system for optimizing design of physical structure
- 420: input-output interface
- 440: data storage
- 442: data representing geometry of physical structure
- 460: processor subsystem
- 480: user interface subsystem
- 482: display data
- 484: user input data
- 490: display
- 495: user input device
- 500: computer-readable medium
- 510: non-transitory data

### DETAILED DESCRIPTION OF EMBODIMENTS

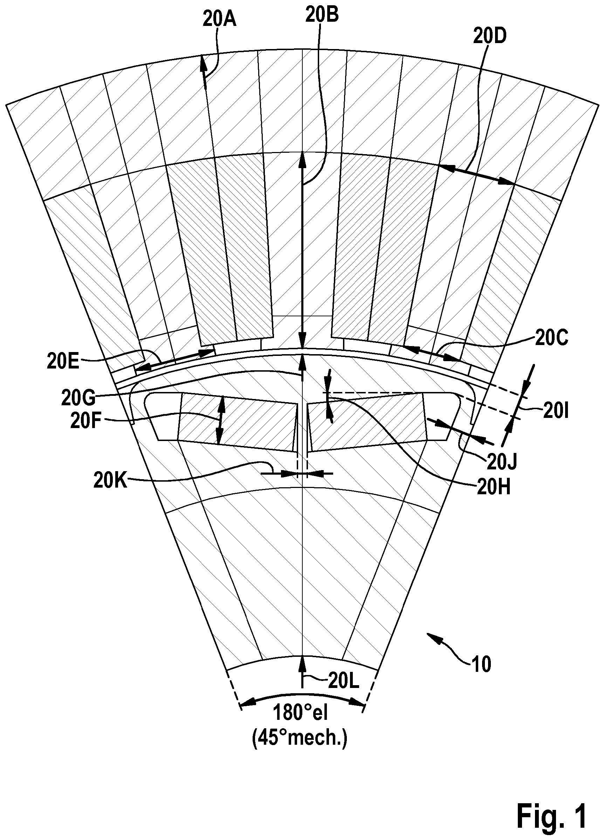

**Fig. 1** shows a geometry template 10 for sizing optimization of an electrical machine with a single-V rotor topology. The geometry template 10 may be represented by a set of scalar geometry parameters, some of which are illustrated in Fig. 1 with reference numerals 20A-20L and which may represent physical quantities such as heights, widths, angles etc. The set of scalar geometry parameters may be predetermined for a particular optimization problem, and the geometry template 10 may be stored as structured data containing values for the respective scalar parameters. Such types of geometry templates are known per se, and used during sizing optimization and similar optimization techniques.

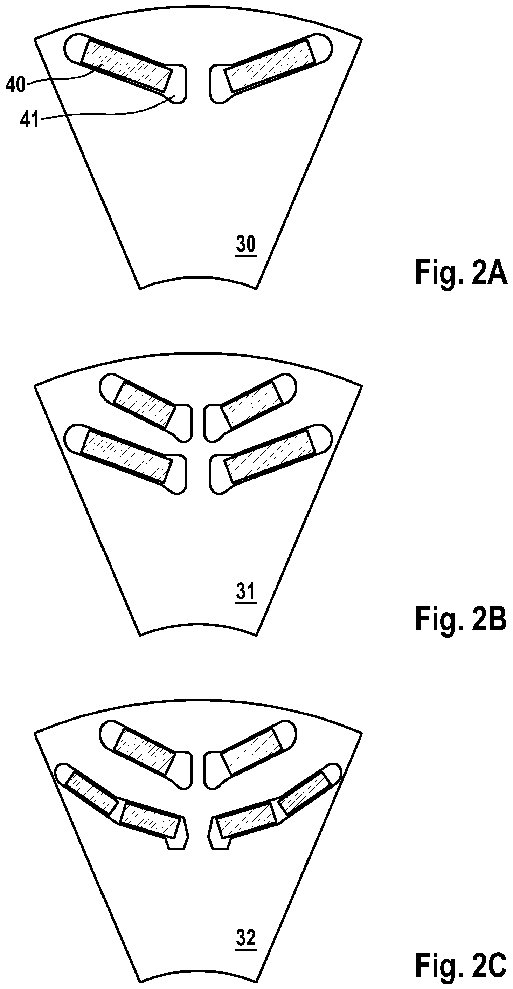

**Figs. 2A-2C** show different rotor topologies 30-32 for electrical machines, namely in Fig. 2A a rotor with a single V topology 30, in Fig. 2B a rotor with a double V topology 31 and in Fig. 2C a rotor with a VC design topology 32. Further indicated are magnets 40 and magnet pockets 41 in the rotor. Fig. 2A-2C together illustrate that the topology of the geometry template may change for a new optimization problem, as for each rotor topology 30-32, a different set of scalar geometry parameters may be relevant, for example containing a different number and/or different types of scalar parameters. This makes it difficult or even impossible to merge the scalar geometry parameters across different optimization problems, which in turn hinders the reuse of prior knowledge obtained from previous optimizations of the same type of physical structure or from elsewhere.

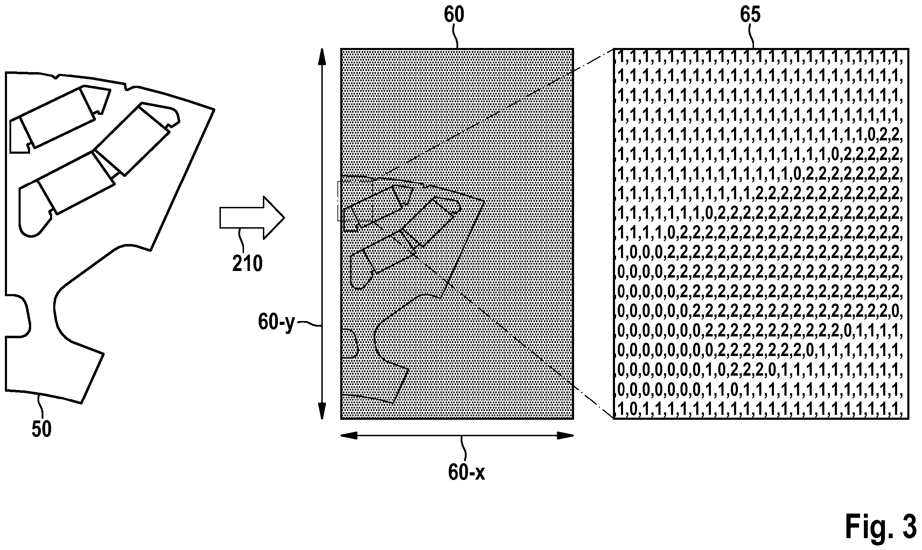

**Figs. 3-8B** illustrate how the use of a pictorial representation of the physical structure may enable a neural network to be trained to learn the relationship between on the one hand the geometry of the physical structure, and in some embodiments also further properties such as a material selection, and on the other hand performance metric values of a physical structure. In general, the physical structure may be a single part but also a compound part, e.g., an assembly of parts. The physical structure may, but does not need to be, part of a physical machine, apparatus or device, and may in some embodiments represent the entire physical machine, apparatus or device.

The following briefly summarizes an embodiment involving the training of a neural network for use in optimizing a rotor of an electrical machine. Since such an electrical machine is typically a symmetric entity with repeating rotor sectors (with an symmetry angle which may correspond to 360°/(number of pole-pairs x 2)) , it may suffice for the geometry of one rotor sector to be optimized, and thus the neural network to be trained on the geometries of individual rotor sectors. Any future or past reference to the optimization of the geometry of a rotor may thus equally refer to the geometry of a rotor sector.

As will also be explained with further reference to Fig. 3, the training may involve obtaining pictorial representations of different geometries of a rotor sector, and possibly additional scalar parameters which are associated with the rotor sector. In addition, performance metric values maybe obtained for these geometries, e.g., from previous simulations, e.g., involving the FEM method, or from measurements of physical embodiments (e.g., prototypes or the like) of the electrical machine, etc.

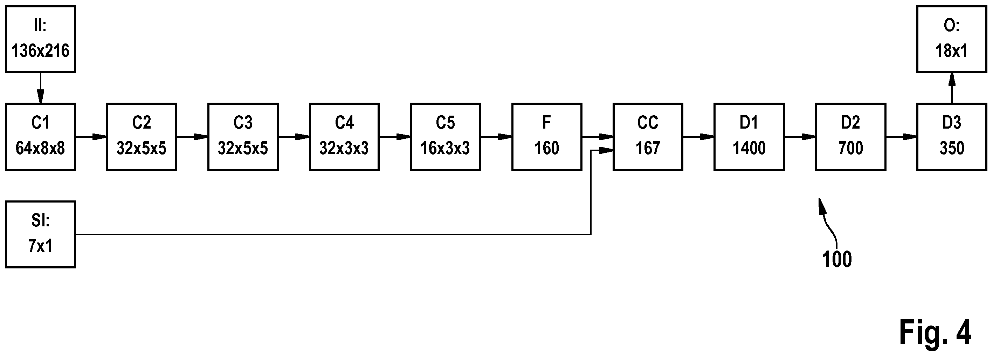

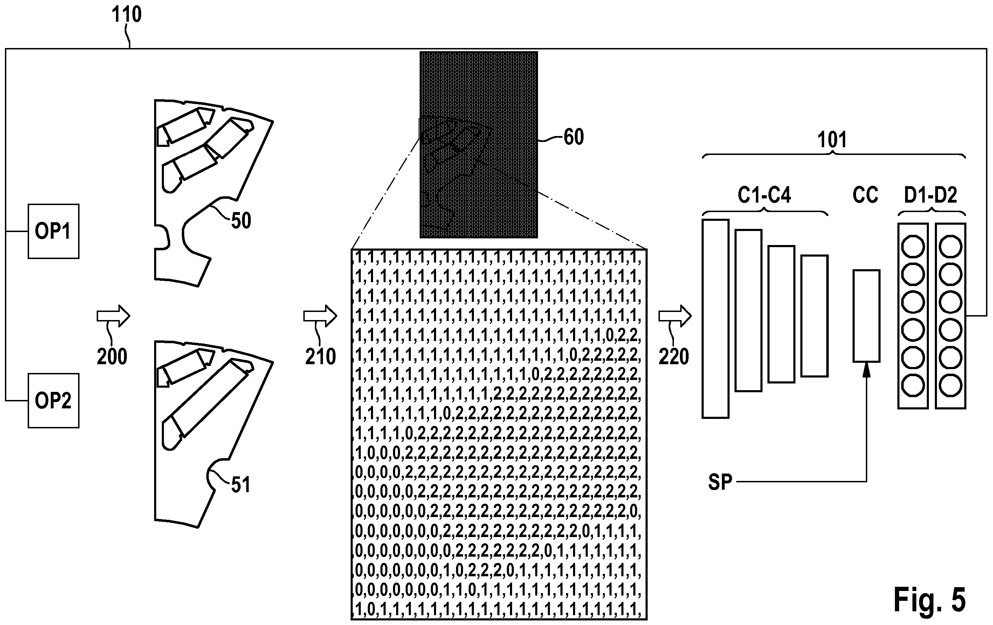

As will also be explained with reference to Fig. 4, a convolutional neural network (CNN) may be provided, which may be configured and trained to extract geometric features from the pictorial representations, and possibly combined with additional scalar parameters, to learn the correlation with value(s) of one or more performance metrics, and thereby to learn to predict such performance metric values from pictorial representations of the geometry of the physical structure. As will also be explained with reference to Fig. 5, during subsequent use in the optimization of a rotor sector within the context of a different optimization problem, the trained neural network may be used to predict performance metric values based on the geometry of the rotor sector in a computationally efficient manner. In particular, the trained neural network may be used in an optimization loop to replace the FEM method and thereby to accelerate multi-objective optimizations of electrical machines.

**Fig. 3** illustrates the conversion of a 2D geometric representation of a rotor sector into a pictorial representation in the form of a 2D image. Such conversion may take place during or before the training of the neural network, namely to obtain training instances for the training of the neural network, but also during or before the subsequent use of the neural network, i.e., the subsequent inference by the neural network, namely to convert a geometry of a physical structure to be optimized into a data format which can be used as input to the trained neural network. More specifically, Fig. 3 shows a vector-based representation 50 of a rotor sector, which may be obtained from, for example, a CAD model of the rotor sector, and which may be converted (denoted by arrow 210) into a 2D-image based representation 60 using known techniques, for example using a same or similar type of technique which exists for rendering and displaying CAD models on a display.

The 2D image is shown to have a limited resolution, e.g., 136 pixels along the horizontal dimension 60-x by 216 pixels along the vertical dimension 60-y. The spatial resolution of the 2D image, or in general the spatial resolution of the pictorial representation, may be suitably selected to enable geometric variations to be sufficiently perceptible and thereby the trained neural network to be sufficiently accurate in its inference, while at the same time striving for a limited spatial resolution to reduce the computational complexity involved in training and subsequently using the trained neural network for inference.

The 2D image may be a single-channel image, e.g., having only image component containing image values. Such image values may conventionally be interpreted as intensity values, but may in the present case have a different meaning so as to represent the geometry of the physical structure in the 2D image in an efficient manner. In particular, the geometry of the physical structure may be encoded as image values in a predetermined or standardized manner to provide for normalization across the training instances. For example, a particular image value (e.g., '1') may be assigned for spatial positions in the 2D image which belong to the physical structure, while another image value (e.g., '0') may be assigned to the surroundings of the physical structure (e.g., '0' denoting surrounding air). Note that the conversion may also encode further properties of the physical structure in the 2D image. For example, a different image value may be selected for different materials of the physical structure. In a so-called tertiary conversion (or tertiary 'extraction' of geometric features), sheet metal may be assigned the image value '1' while magnets may be assigned the image value '2' (while continuing to assign the image value '0' for air). The 2D image 60 represents an example of this tertiary conversion, which can also be seen in the zoomed-in portion 65 of the 2D image 60 containing the three possible image values '0', '1' and '2'.

It is noted that the bit depth of the image values may be selected based on the encoding scheme. For example, for tertiary conversion, a 2-bit bit depth may suffice, but for practical reasons, also another bit depth may be selected, e.g., the standard 8-bit bit depth. It is noted that the conversion may use any assignment of geometric features to image values, and may for example use a different order than indicated above (e.g., air = '2', sheet metal = '0', magnet = '1'). In general, it would be advantageous to use a standardized assignment during training, e.g., for all training instances, and during subsequent use.

In general, the conversion of a geometric representation of a physical structure into a pictorial representation may use a same or similar technique as is available for displaying the geometric representation on a display, but which may be adapted to obtain an assignment to image values which is most suitable to represent the geometric features of the physical structures, possibly including the type of material. These type of display techniques are also referred to as rendering techniques, and are known per se in the art.

Fig. 4 illustrates a neural network 100 arranged to, during training and subsequent use, receive a pictorial representation as input and to output performance metric values. In the example of Fig. 4, the neural network 100 is shown to comprise five convolutional layers C1-C5 which receive a 2D image having a resolution and thereby input shape of 136x216 pixels. The convolutional layers C1-C5 may in general each have a plurality of filters of different sizes, e.g., as indicated by the parameters shown with each convolutional layer in Fig. 4, associated activation functions (e.g. Exponential Linear Unit, ELU), and may in general include one or more batch normalization layers. The convolutional layers may then be followed by a flattening operation F (or flattening 'layer') and a concatenation layer CC which may concatenate the flattened output of the convolutional layers with scalar input parameters, being in the example of Fig. 4 seven parameters, i.e., a 7x1 data vector. The concatenation layer is optional and may only need to be used if it is desired to train the neural network further based on scalar parameters associated with the geometry of the physical structure, as is and will be described elsewhere in this specification. The concatenation layer may then be followed by three dense layers D1-D3, each having a plurality of neurons and activation functions and which may include one or more batch normalization layers.

In the example of Fig. 4, the neural network 100 is arranged to provide an output of 18 scalar parameters, which may represent values of performance metrics and which during the training represent the objectives of the training and during the subsequent use the inferred output by the neural network and thereby the target values for which the geometry is to be optimized. Preferably, the values of the performance metrics are normalized during training.

The scalar input may be used for various scalar parameters associated with the physical structure. For example, such scalar parameters may provide an additional characterization of the physical structure shown in the pictorial representation, or a characterization by one or more scalar value of a geometry of another physical structure which is associated with the depicted physical structure. For example, the geometry of the stator of electrical machines is usually very similar and may be represented using a uniform geometric template, and therefore by one or more scalar parameters representing the geometric template. However, the topology of the rotor varies greatly between electrical **machines,** and may rather be represented by the pictorial representation. Other scalar parameters may be the number of pole pairs, current strength, voltage bearing, etc.

To enable the neural network to correlate inputs and outputs for different geometries and/or topologies, the training instances representing these different geometries and/or topologies may preferably be trained together in a complete but shuffled dataset. Namely, if the training alternates between one type of geometry and/or topology and another type of geometry and/or topology, this may result in a situation where the most recently trained geometries and/or topologies are less easy to learn and may yield poor predictions.

Example (hyper)parameters for the neural network 100 may be the following:
Activation Function: ELU (alpha=1.0)
Epoch: 1000 (early stopping)
Learning rate: 0,0001
Loss function: Mean Square Error
Validation Split: 10% (on training data during training)
Batch Normalization: Yes
Total samples: 17955
Test samples: 1796
Output parameters: 18

It will be appreciated that depending on the type of physical structure and/or the general class of geometric optimization problems for which the neural network is to be trained, the neural network may have any other suitable architecture involving convolutional and dense layers, and may be trained using any other suitable set of training parameters.

Having trained the neural network, the trained neural network may then be used in the optimization of a geometry of a same type of physical structure. Essentially, the trained neural network may enable the effect of a change in geometry on the performance metric values to be rapidly evaluated, e.g., in the order of several microseconds or milliseconds. This enables various uses. For example, the trained neural network may be used in a 'pre-optimization' to limit the parameter space for a subsequent FEM-based optimization. Another example is that the entire optimization of the geometry of the physical structure may be performed using the neural network, thereby avoiding use of the FEM.

Fig. 5 shows an example of the latter. In this example, two optimizers OP1, OP2 may optimize different part of a rotor sector, but in general, any number of such optimizers may be used, e.g., to optimize different parts of the geometry of a physical structure. Such optimizers may be known types of optimizers, for example using a genetic algorithm or a gradient-based optimization, and may perform the optimization based on, for example, a set of scalar geometry parameters which each may represent a parametric geometry template, as are known per se from the field of sizing optimization. The output of each optimizer OP1, OP2 (denoted by arrow 200) may be an optimized set of scalar geometry parameters, which may each represent a geometrical representation of the geometry of the rotor sector. These geometrical representations are depicted in Fig. 5 as a vector-based drawing 50, 51. Each of these geometric representations may be converted (denoted by arrow 210) into a pictorial representation, e.g., in the manner as described with reference to Fig. 3 and elsewhere. Fig. 5 shows, by way of example, one pictorial representation in the form of a 2D image 60 obtained for the geometric representation 50.

Both pictorial representations may then be used separately as input (denoted by arrow 220) to the neural network 101, being in this example a neural network comprising four convolutional layers C1-C4, a concatenating layer CC and two dense layers D1-D2. The concatenating layer CC may accept scalar parameters SP as input. It is noted that both the pictorial representation and the scalar parameters may be normalized, e.g., in a manner as described elsewhere. The neural network may then produce output 110 in the form of inferred performance metric values, e.g., inferred KPI values, which may be unnormalized by a conversion matrix (not explicitly shown in Fig. 5) before being fed back to the respective optimizer OP1, OP2 to allow the optimization to proceed on the basis of the inferred performance metric values. This process may be repeated iteratively, in which in each iteration, a newly optimized geometry for the physical structure may be obtained.

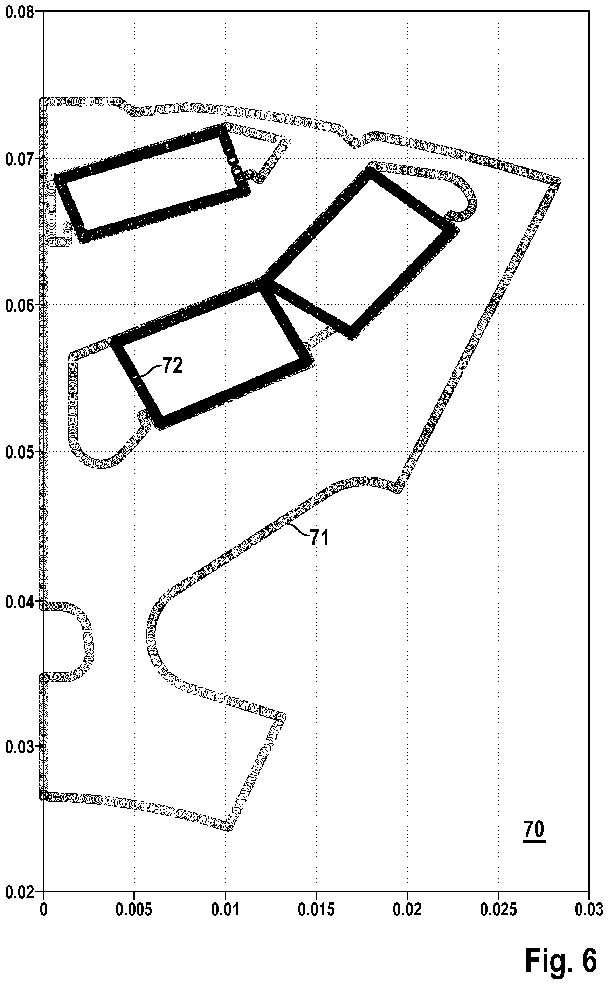

**Figs. 6-7** further relate to the pictorial representation of the geometry of a physical structure. Fig. 6 shows another example of a 2D pictorial representation of a rotor sector, showing a 2D point cloud 70 comprising a point cloud part 71 representing metal sheet and a point cloud part 72 representing magnets. Such conversion to a 2D point cloud may involve representing a 2D geometric structure as points which may be distributed along the edges of the 2D geometric structure. Such a point cloud may be expressed as a matrix with N (= number of points) rows and p (= number of dimensions) columns, with each cell of the matrix containing a coordinate value of a respective point in the respective dimension. Since such a matrix may be considered to represent unstructured data, it may be preferred to encode the point cloud in a structured data format, for example using methods such as PointNet (http://arxiv.org/abs/1612.00593) or PointNet++ (https://arxiv.org/abs/1706.02413). If it is desired to assign further value(s) to each point, e.g., to assign a material to each point, the data format may have to be extended with one or more further data channels.

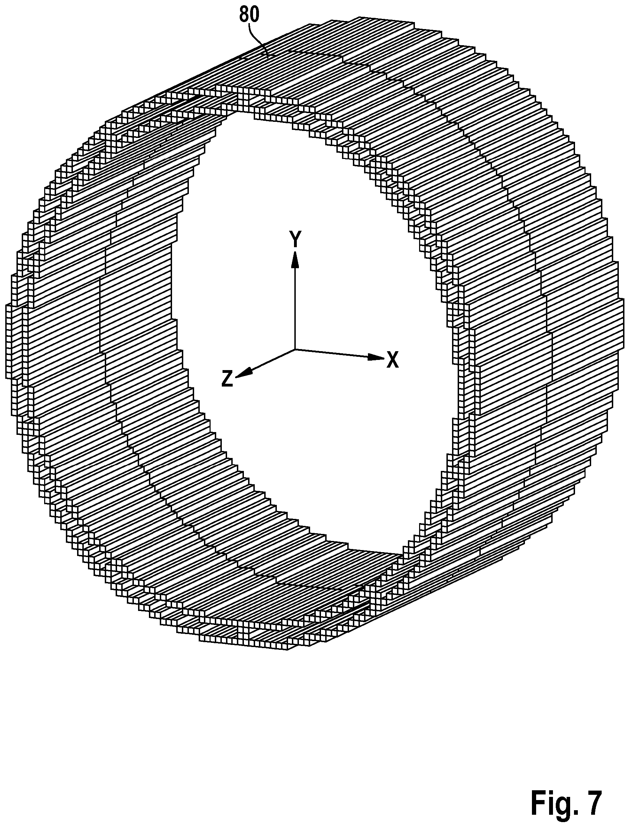

**Fig. 7** illustrates the conversion of a 3D geometric representation of a housing of an electrical machine into a pictorial representation in the form of a 3D voxel representation 80. Alternatively, such a 3D geometric representation may be converted into a 3D point cloud, which may involve representing the 3D geometric structure as points which may be distributed along the faces of the 3D geometric structure. Note that a 3D geometric structure may equally be represented by a 3D volumetric image, e.g., by voxelated data as shown in Fig. 7, or using several 2D images showing different views of the physical structure and together representing a so-called 3D multiview image of the physical structure.

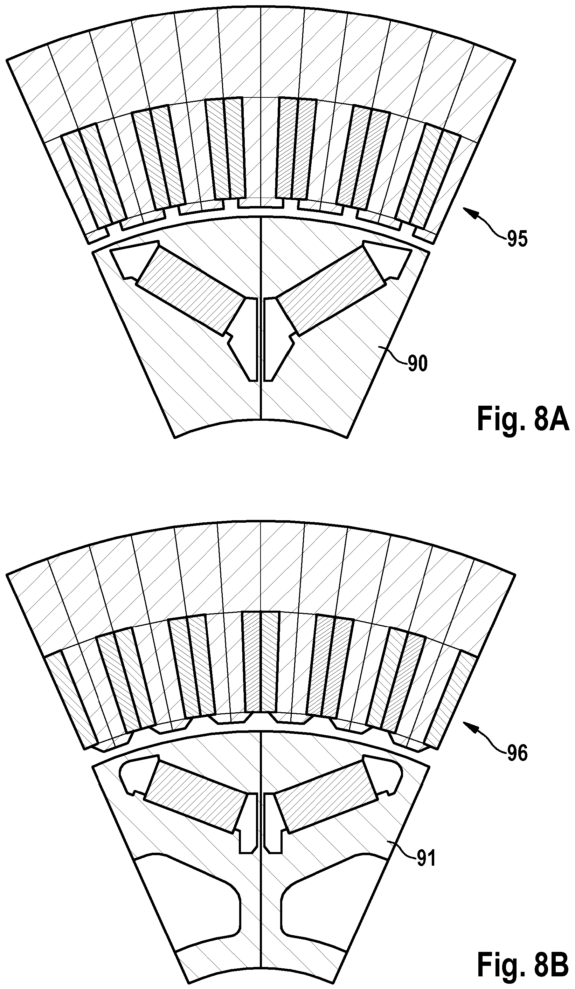

**Figs 8A-8B** illustrate 2D image representations 90, 91 of rotors in which different winding topologies, with and without pitch shortening, are encoded as different image values. Namely, instead or in addition to encoding a material of the physical structure as a pictorial value, also other types of information may be encoded, such as the phase u or v, or in case of three phases, the phases u, v, or w. Such different winding topologies may thus be represented by assigning different pictorial values, e.g., u = '3', v = '4', w = '5'. Fig. 8A shows such an assignment either without (Fig. 8A) or with pitch shortening (Fig. 8B), and shows the different pictorial values in the form of line-patterns to facilitate reproduction.

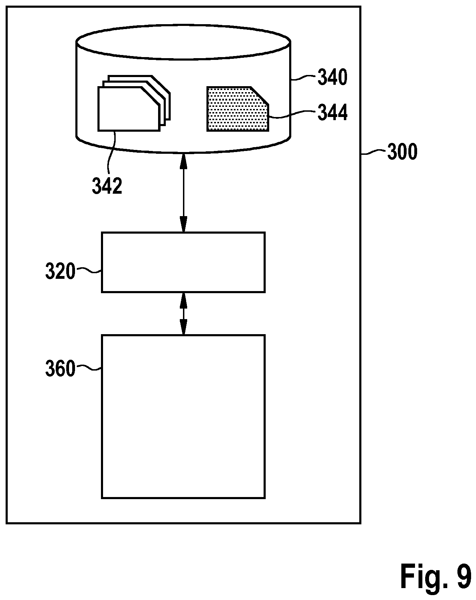

**Fig.** 9 shows a system 300 for training a neural network for use in optimizing a geometry of a physical structure with respect to at least one performance metric, which is elsewhere also simply referred to as 'training system'. The system 300 may comprise an input interface 320 for accessing training data 342 comprising training instances as described elsewhere in this specification. As shown in Fig. 9, the input interface 320 may be a data storage interface 320 to a data storage 340 which may comprise said data 342. For example, the input interface 320 may be a memory interface or a persistent storage interface, e.g., a hard disk or an SSD interface, but also a personal, local or wide area network interface such as a Bluetooth, Zigbee or Wi-Fi interface or an ethernet or fibreoptic interface. The data storage 340 may be an internal data storage of the training system 300, but also an external data storage, e.g., a network-accessible data storage.

The system 300 may be further configured to access data 344 defining a neural network as described elsewhere in this specification. The neural network may initially be considered an 'untrained' neural network in that parameters of the neural network may not yet be trained, or at least not yet trained to what may be considered a sufficient degree.

As also shown in Fig. 9, in some embodiments, the training data 342 and the neural network data 344 may be accessed from a same data storage 340 via a same input interface 320. However, in other embodiments both types of data may be accessed from different data storages, e.g., using different sub-interfaces of the input interface 320.

The system 300 is further shown to comprise a processor subsystem 360 which may be configured to train the neural network based on the training data 342 in a manner as described elsewhere in this specification, thereby obtaining a trained neural network. Although not explicitly shown in Fig. 9, the training system 300 may, via an output interface, output data representing the trained neural network. For example, the neural network data 344 defining the 'untrained' neural network may during or after the training be replaced by the neural network data of the trained neural network, in that parameters of the neural network may be adapted to reflect the training on the training data 342. In other embodiments, the trained neural network data may be stored separately from the neural network data 344 defining the 'untrained' neural network. It is noted that the input interface 320 may also be an output interface, e.g., a so-called input-output ('I/O') interface 320, via which the storing of the trained neural network data on a data storage may take place.

In general, the training system 300 may be embodied as, or in, a single device or apparatus, such as a workstation or a server. The server may be an embedded server or a stand-alone server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the system may be implemented in the device or apparatus in the form of programmable logic, e.g., as a Field-Programmable Gate Array (FPGA). In general, each functional unit of the training system 300 may be implemented in the form of a circuit. The training system 300 may also be implemented in a distributed manner, e.g., involving different devices or apparatuses, such as distributed local or cloud-based servers.

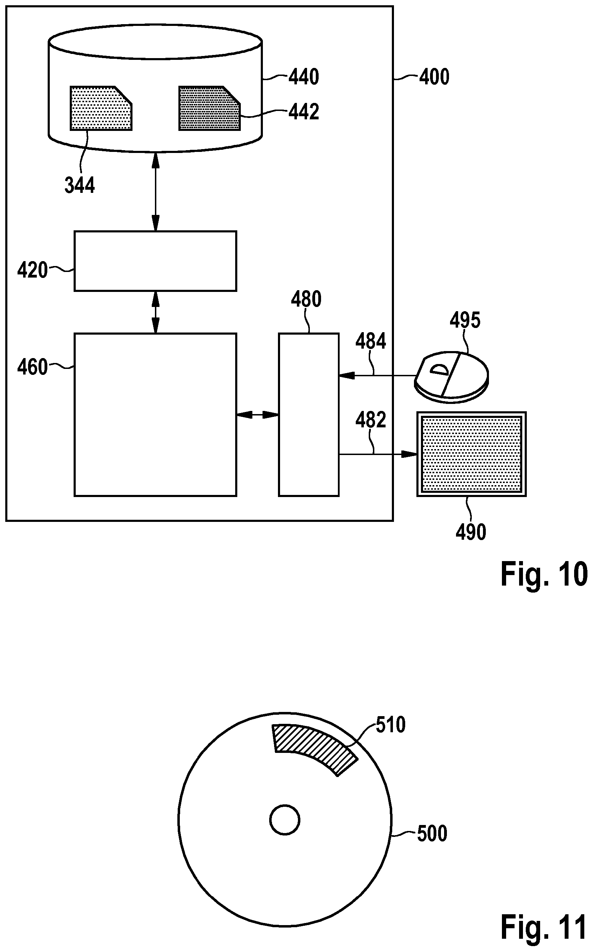

**Fig. 10** shows a system 400 for optimizing a geometry of a physical structure with respect to at least one performance metric using a trained neural network, which is elsewhere also simply referred to as 'optimization system'. The system 400 may comprise an input interface 420 for accessing data defining a trained neural network 344 as obtained by the system 300 of Fig. 9, or in general representing a trained neural network as described elsewhere in this specification. In the example of Fig. 10, the neural network data 344 is shown to be accessed from a data storage 440. It is noted that the same implementation options may apply to the input interface 420 and the data storage 440 as previously as described for respectively the input interface 320 and the data storage 340 of the training system 300 of Fig. 9, including interface 420 being an input-output ('I/O') interface 420.

The optimization system 400 is further shown to comprise a processor subsystem 460 which may be configured to optimize a geometry of a physical structure using the trained neural network in a manner as described elsewhere in this specification. For that purpose, the data storage 440 is shown to comprise data 442 representing the geometry of physical structure, e.g., in the form of a parametric geometry template, which may be accessed via the input interface 420 and which may be, during or after optimization, adapted to reflect the optimization of the geometry of the physical structure.

As an optional component, the optimization system 400 may comprise a user interface subsystem 480 which may be configured to, during operation of the system 400, enable a user to interact with the system 400, for example using a graphical user interface, to control the optimization of the geometry of the physical part. For that purpose, the user interface subsystem 480 may comprise a user input interface (not separately shown in Fig. 10) which may be configured to receive user input data 484 from a user input device 495 operable by the user. The user input device 495 may take various forms, including but not limited to a computer mouse, touch screen, keyboard, microphone, etc. In general, the user input interface may be of a type which corresponds to the type of user input device 495, i.e., it may be a thereto corresponding type of user device interface. The user interface subsystem 480 may further comprise a display output interface (not separately shown in Fig. 10) for outputting display data 482 to a rendering device, such as a display 490.

In general, the optimization system 400 may be embodied as, or in, a single device or apparatus, such as a workstation or a server. The server may be an embedded server or a stand-alone server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the system may be implemented in the device or apparatus in the form of programmable logic, e.g., as a Field-Programmable Gate Array (FPGA). In general, each functional unit of the optimization system 400 may be implemented in the form of a circuit. The optimization system 400 may also be implemented in a distributed manner, e.g., involving different devices or apparatuses, such as distributed local or cloud-based servers.

Any method described in this specification may be implemented on a computer as a computer implemented method, as dedicated hardware, or as a combination of both. As also illustrated in Fig. **11****,** instructions for the computer, e.g., executable code, may be stored on a computer readable medium 500, e.g., in the form of a series 510 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 11 shows an optical disc 500. In an alternative embodiment of the computer readable medium 500, the computer readable medium 500 may comprise transitory or non-transitory data 510 representing a trained neural network as described elsewhere in this specification. In an alternative embodiment of the computer readable medium 500, the computer readable medium 500 may comprise transitory or non-transitory data 510 representing a geometry of a physical structure as obtained by an optimization described elsewhere in this specification.

Examples, embodiments or optional features, whether indicated as non-limiting or not, are not to be understood as limiting the invention as claimed.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computer-implemented method for training a neural network for use in optimizing a geometry of a physical structure with respect to at least one performance metric, wherein the physical structure is a part of an electrical machine, and wherein the at least one performance metric comprises electrical loads associated with the electrical machine, the method comprising:
- providing training data (342) comprising a plurality of training instances representing different geometries of the physical structure, each training instance comprising:
- a pictorial representation (60-62, 70, 80, 90, 91) of a respective geometry of the physical structure, wherein the pictorial representation comprises one or more 2D raster images comprised of pixels or a 3D volumetric image comprised of voxels;
- a value of at least one performance metric which is associated with the respective geometry of the physical structure;
- providing a neural network (100, 101) comprising a plurality of convolutional layers (C1-C5) for receiving a respective pictorial representation of the training data as input and a plurality of dense layers (D1-D3) for generating an output of the neural network, wherein the output of the neural network comprises the at least one performance metric; and
- training the neural network using the training data to obtain a trained neural network which is arranged to infer a value of the at least one performance metric from a pictorial representation of a geometry of the physical structure.

2. The method according to claim 1, wherein each training instance further comprises one or more scalar parameters (SP) associated with the physical structure represented by the training instance, and wherein the neural network (100, 101) further comprises a concatenation layer (CC) for receiving an output of the plurality of convolutional layers and the one or more scalar parameters as input (SI) and for providing an concatenated output to the plurality of dense layers (D1-D3).

3. The method according to claim 1 or 2, wherein the method further comprises:
- obtaining geometric representations (50, 51) of the different geometries of the physical structure; and
- generating the pictorial representation (60-62, 70, 80, 90, 91) of the respective geometry of the physical structure from a respective geometric representation.

4. The method according to claim 3, wherein generating the pictorial representations from the geometric representations comprises:
- generating a 2D image (60-62) from a 2D geometric representation of a geometry of the physical structure; or
- generating a 3D volumetric image or a 3D multiview image from a 3D geometric representation of a geometry of the physical structure.

5. The method according to claim 3 or 4, wherein generating the pictorial representations (60-62, 70, 80, 90, 91) from the geometric representations comprises:
- obtaining a material indication of at least a part of the physical structure; and
- encoding the material indication as a pictorial value of the at least part of the physical structure in the pictorial representation.

6. The method according to claim 2, wherein the one or more scalar parameters (SP) comprise at least one of a group of:
- a scalar design parameter of the part of the electrical machine; and
- a characterization of a geometry of another part of the electrical machine.

7. A computer-implemented method for optimizing a geometry of a physical structure with respect to at least one performance metric, wherein the physical structure is a part of an electrical machine, and wherein the at least one performance metric comprises electrical loads associated with the electrical machine, the method comprising:
- obtaining a trained neural network as obtained by the method according to any one of claims 1 to 6; optimizing the geometry of the physical structure using the trained neural network, wherein said optimizing comprises:
i) generating (210) a pictorial representation (60) of the geometry of the physical structure, wherein the pictorial representation comprises one or more 2D raster images comprised of pixels or a 3D volumetric image comprised of voxels;
ii) using (220) the pictorial representation of the geometry as input to the trained neural network (101) to infer a value of the at least one performance metric; and
iii) based on the inferred value (101), optimizing the geometry of the physical structure to obtain an optimized geometry of the physical structure.

8. The method according to claim 7, further comprising iteratively optimizing the geometry of the physical structure by, in an iteration of said iterative optimization, generating the pictorial representation (60) from the optimized geometry of the physical structure which is obtained in a previous iteration of the iterative optimization.

9. The method according to claim 7 or 8, wherein optimizing the geometry comprises using a genetic algorithm or a gradient-based optimization.

10. A computer-readable medium (500) comprising transitory or non-transitory data (510) representing instructions which, when executed by a processor system, cause the processor system to perform the computer-implemented method according to any one of claims 1 to 9.

11. A system (300) for training a neural network for use in optimizing a geometry of a physical structure with respect to at least one performance metric, wherein the physical structure is a part of an electrical machine, and wherein the at least one performance metric comprises electrical loads associated with the electrical machine, the system comprising:
- an input interface (320) for accessing:
- training data (342) comprising a plurality of training instances representing different geometries of the physical structure, each training instance comprising:
- a pictorial representation of a respective geometry of the physical structure, wherein the pictorial representation comprises one or more 2D raster images comprised of pixels or a 3D volumetric image comprised of voxels;
- a value of at least one performance metric which is associated with the respective geometry of the physical structure;
- data (344) defining a neural network comprising a plurality of convolutional layers for receiving a respective pictorial representation of the training data as input and a plurality of dense layers for generating an output of the neural network, wherein the output of the neural network comprises the at least one performance metric; and
- a processor subsystem (360) configured to train the neural network using the training data to obtain a trained neural network which is arranged to infer a value of the at least one performance metric from a pictorial representation of a geometry of the physical structure.

12. A system (400) for optimizing a geometry of a physical structure with respect to at least one performance metric, wherein the physical structure is a part of an electrical machine, and wherein the at least one performance metric comprises electrical loads associated with the electrical machine, the system comprising:
- an input interface (420) for accessing data (344) defining a trained neural network as obtained by the method according to any one of claims 1 to 6;
- a processor subsystem (460) configured to optimize the geometry of the physical structure using the trained neural network, wherein said optimizing comprises:
i) generating a pictorial representation of the geometry of the physical structure, wherein the pictorial representation comprises one or more 2D raster images comprised of pixels or a 3D volumetric image comprised of voxels;
ii) using the pictorial representation of the geometry as input to the trained neural network to infer a value of the at least one performance metric; and
iii) based on the inferred value, optimizing the geometry of the physical structure to obtain an optimized geometry of the physical structure.

## Patentansprüche

1. Computer-implementiertes Verfahren zum Trainieren eines neuronalen Netzes zur Verwendung beim Optimieren einer Geometrie einer physischen Struktur mit Bezug auf wenigstens eine Leistungsfähigkeitsmetrik, wobei die physische Struktur ein Teil einer elektrischen Maschine ist, und wobei die wenigstens eine Leistungsfähigkeitsmetrik elektrische Lasten umfasst, die mit der elektrischen Maschine assoziiert sind, wobei das Verfahren Folgendes umfasst:
- Bereitstellen von Trainingsdaten (342), die eine Mehrzahl von Trainingsinstanzen umfassen, die unterschiedliche Geometrien der physischen Struktur repräsentieren, wobei jede Trainingsinstanz Folgendes umfasst:
- eine bildhafte Repräsentation (60-62, 70, 80, 90, 91) einer jeweiligen Geometrie der physischen Struktur, wobei die bildhafte Repräsentation ein oder mehrere 2D-Rasterbilder, die aus Pixeln bestehen, oder ein volumetrisches 3D-Bild, das aus Voxeln besteht, umfasst;
- einen Wert von wenigstens einer Leistungsfähigkeitsmetrik, der mit der jeweiligen Geometrie der physischen Struktur assoziiert ist;
- Bereitstellen eines neuronalen Netzes (100, 101), das eine Mehrzahl von Faltungsschichten (C1-C5) zum Empfangen einer jeweiligen bildhaften Repräsentation der Trainingsdaten als Eingabe und eine Mehrzahl dichter Schichten (D1-D3) zum Erzeugen einer Ausgabe des neuronalen Netzes umfasst, wobei die Ausgabe des neuronalen Netzes die wenigstens eine Leistungsfähigkeitsmetrik umfasst; und
- Trainieren des neuronalen Netzes unter Verwendung der Trainingsdaten, um ein trainiertes neuronales Netz zu erhalten, das zum Ableiten eines Wertes der wenigstens einen Leistungsfähigkeitsmetrik aus einer bildhaften Repräsentation einer Geometrie der physischen Struktur eingerichtet ist.

2. Verfahren nach Anspruch 1, wobei jede Trainingsinstanz ferner einen oder mehrere Skalarparameter (SP) umfasst, die mit der physischen Struktur assoziiert sind, die durch die Trainingsinstanz repräsentiert wird, und wobei das neuronale Netz (100, 101) ferner eine Verkettungsschicht (CC) zum Empfangen einer Ausgabe der Mehrzahl von Faltungsschichten und des einen oder mehreren Skalarparameter als Eingabe (SI) und zum Liefern einer verketteten Ausgabe an die Mehrzahl dichter Schichten (D1-D3) umfasst.

3. Verfahren nach Anspruch 1 oder 2, wobei das Verfahren ferner Folgendes umfasst:
- Erhalten geometrischer Repräsentationen (50, 51) der verschiedenen Geometrien der physischen Struktur; und
- Erzeugen der bildhaften Repräsentationen (60-62, 70, 80, 90, 91) der jeweiligen Geometrie der physischen Struktur aus einer jeweiligen geometrischen Repräsentation.

4. Verfahren nach Anspruch 3, wobei das Erzeugen der bildhaften Repräsentationen aus den geometrischen Repräsentationen Folgendes umfasst:
- Erzeugen eines 2D-Bildes (60-62) aus einer geometrischen 2D-Repräsentation einer Geometrie der physischen Struktur; oder
- Erzeugen eines volumetrischen 3D-Bildes oder eines 3D-Mehrsichtbildes aus einer geometrischen 3D-Repräsentation einer Geometrie der physischen Struktur.

5. Verfahren nach Anspruch 3 oder 4, wobei das Erzeugen der bildhaften Repräsentationen (60-62, 70, 80, 90, 91) aus den geometrischen Repräsentationen Folgendes umfasst:
- Erhalten einer Materialindikation wenigstens eines Teils der physischen Struktur; und
- Codieren der Materialindikation als ein bildhafter Wert des wenigstens Teils der physischen Struktur in der bildhaften Repräsentation.

6. Verfahren nach Anspruch 2, wobei der eine oder die mehreren Skalarparameter (SP) wenigstens einen aus einer Gruppe aus Folgendem umfassen:
- einen Skalardesignparamter des Teils der elektrischen Maschine; und
- eine Charakterisierung einer Geometrie eines anderen Teils der elektrischen Maschine.

7. Computer-implementiertes Verfahren zum Optimieren einer Geometrie einer physischen Struktur mit Bezug auf wenigstens eine Leistungsfähigkeitsmetrik, wobei die physische Struktur ein Teil einer elektrischen Maschine ist, und wobei die wenigstens eine Leistungsfähigkeitsmetrik elektrische Lasten umfasst, die mit der elektrischen Maschine assoziiert sind, wobei das Verfahren Folgendes umfasst:
- Erhalten eines trainierten neuronalen Netzes, wie es durch das Verfahren nach einem der Ansprüche 1 bis 6 erhalten wird; Optimieren der Geometrie der physischen Struktur unter Verwendung des trainierten neuronalen Netzes, wobei das Optimieren Folgendes umfasst:
i) Erzeugen (210) einer bildhaften Repräsentation (60) der Geometrie der physischen Struktur, wobei die bildhafte Repräsentation ein oder mehrere 2D-Rasterbilder, die aus Pixeln bestehen, oder ein volumetrisches 3D-Bild, das aus Voxeln besteht, umfasst;
ii) Verwenden (220) der bildhaften Repräsentation der Geometrie als Eingabe in das trainierte neuronale Netz (101), um einen Wert der wenigstens einen Leistungsfähigkeitsmetrik abzuleiten; und
iii) basierend auf dem abgeleiteten Wert (101), Optimieren der Geometrie der physischen Struktur, um eine optimierte Geometrie der physischen Struktur zu erhalten.

8. Verfahren nach Anspruch 7, das ferner iteratives Optimieren der Geometrie der physischen Struktur durch, in einer Iteration der iterativen Optimierung, Erzeugen der bildhaften Repräsentation (60) aus der optimierten Geometrie der physischen Struktur umfasst, die in einer vorherigen Iteration der iterativen Optimierung erhalten wird.

9. Verfahren nach Anspruch 7 oder 8, wobei das Optimieren der Geometrie Verwenden eines genetischen Algorithmus oder einer gradientenbasierten Optimierung umfasst.

10. Computerlesbares Medium (500), das flüchtige oder nichtflüchtige Daten (510) umfasst, die Anweisungen repräsentieren, die bei Ausführung durch ein Prozessorsystem das Prozessorsystem dazu veranlassen, das computerimplementierte Verfahren nach einem der Ansprüche 1 bis 9 durchzuführen.

11. System (300) zum Trainieren eines neuronalen Netzes zur Verwendung beim Optimieren einer Geometrie einer physischen Struktur mit Bezug auf wenigstens eine Leistungsfähigkeitsmetrik, wobei die physische Struktur ein Teil einer elektrischen Maschine ist, und wobei die wenigstens eine Leistungsfähigkeitsmetrik elektrische Lasten umfasst, die mit der elektrischen Maschine assoziiert sind, wobei das System Folgendes umfasst:
- eine Eingabeschnittstelle (320) zum Zugreifen auf:
- Trainingsdaten (342), die eine Mehrzahl von Trainingsinstanzen umfassen, die unterschiedliche Geometrien der physischen Struktur repräsentieren, wobei jede Trainingsinstanz Folgendes umfasst:
- eine bildhafte Repräsentation einer jeweiligen Geometrie der physischen Struktur, wobei die bildhafte Repräsentation ein oder mehrere 2D-Rasterbilder, die aus Pixeln bestehen, oder ein volumetrisches 3D-Bild, das aus Voxeln besteht, umfasst;
- einen Wert von wenigstens einer Leistungsfähigkeitsmetrik, der mit der jeweiligen Geometrie der physischen Struktur assoziiert ist;
- Daten (344), die ein neuronales Netz definieren, das eine Mehrzahl von Faltungsschichten zum Empfangen einer jeweiligen bildhaften Repräsentation der Trainingsdaten als Eingabe und eine Mehrzahl dichter Schichten zum Erzeugen einer Ausgabe des neuronalen Netzes umfasst, wobei die Ausgabe des neuronalen Netzes die wenigstens eine Leistungsfähigkeitsmetrik umfasst; und
- ein Prozessoruntersystem (360), das zum Trainieren des neuronalen Netzes unter Verwendung der Trainingsdaten konfiguriert ist, um ein trainiertes neuronales Netz zu erhalten, das zum Ableiten eines Wertes der wenigstens einen Leistungsfähigkeitsmetrik aus einer bildhaften Repräsentation einer Geometrie der physischen Struktur eingerichtet ist.

12. System (400) zum Optimieren einer Geometrie einer physischen Struktur mit Bezug auf wenigstens eine Leistungsfähigkeitsmetrik, wobei die physische Struktur ein Teil einer elektrischen Maschine ist, und wobei die wenigstens eine Leistungsfähigkeitsmetrik elektrische Lasten umfasst, die mit der elektrischen Maschine assoziiert sind, wobei das System Folgendes umfasst:
- eine Eingabeschnittstelle (420) zum Zugreifen auf Daten (344), die ein trainiertes neuronales Netz definieren, wie es durch das Verfahren nach einem der Ansprüche 1 bis 6 erhalten wird;
- ein Prozessoruntersystem (460), das zum Optimieren der Geometrie der physischen Struktur unter Verwendung des trainierten neuronalen Netzes konfiguriert ist, wobei das Optimieren Folgendes umfasst:
i) Erzeugen einer bildhaften Repräsentation der Geometrie der physischen Struktur, wobei die bildhafte Repräsentation ein oder mehrere 2D-Rasterbilder, die aus Pixeln bestehen, oder ein volumetrisches 3D-Bild, das aus Voxeln besteht, umfasst;
ii) Verwenden der bildhaften Repräsentation der Geometrie als Eingabe in das trainierte neuronale Netz, um einen Wert der wenigstens einen Leistungsfähigkeitsmetrik abzuleiten; und
iii) basierend auf dem abgeleiteten Wert, Optimieren der Geometrie der physischen Struktur, um eine optimierte Geometrie der physischen Struktur zu erhalten.

## Revendications

1. Procédé mis en œuvre par ordinateur pour entraîner un réseau neuronal à utiliser pour optimiser la géométrie d'une structure physique par rapport à au moins une mesure de performance, dans lequel la structure physique est une partie d'une machine électrique, et dans lequel l'au moins une mesure de performance comprend des charges électriques associées à la machine électrique, le procédé comprenant les étapes suivantes :
- fournir des données d'entraînement (342) comprenant une pluralité d'instances d'entraînement représentant différentes géométries de la structure physique, chaque instance d'entraînement comprenant :
- une représentation picturale (60-62, 70, 80, 90, 91) d'une géométrie respective de la structure physique, où la représentation picturale comprend une ou plusieurs images matricielles 2D composées de pixels ou une image volumétrique 3D composée de voxels ;
- une valeur d'au moins une mesure de performance associée à la géométrie respective de la structure physique ;
- fournir un réseau neuronal (100, 101) comprenant une pluralité de couches convolutives (C1-C5) pour recevoir une représentation picturale respective des données d'entraînement comme entrée et une pluralité de couches denses (D1-D3) pour générer une sortie du réseau neuronal, où la sortie du réseau neuronal comprend l'au moins une mesure de performance ; et
- entraîner le réseau neuronal à l'aide des données d'entraînement afin d'obtenir un réseau neuronal entraîné qui est conçu pour déduire une valeur de l'au moins une mesure de performance à partir d'une représentation graphique de la géométrie de la structure physique.

2. Procédé selon la revendication 1, dans lequel chaque instance d'entraînement comprend en outre un ou plusieurs paramètres scalaires (SP) associés à la structure physique représentée par l'instance d'entraînement, et dans lequel le réseau neuronal (100, 101) comprend en outre une couche de concaténation (CC) pour recevoir une sortie de la pluralité de couches convolutives et les un ou plusieurs paramètres scalaires en tant qu'entrée (SI) et pour fournir une sortie concaténée à la pluralité de couches denses (D1-D3).

3. Procédé selon la revendication 1 ou la revendication 2, dans lequel le procédé comprend en outre les étapes suivantes :
- obtenir des représentations géométriques (50, 51) des différentes géométries de la structure physique ; et
- générer la représentation picturale (60-62, 70, 80, 90, 91) de la géométrie respective de la structure physique à partir d'une représentation géométrique respective.

4. Procédé selon la revendication 3, dans lequel la génération des représentations picturales à partir des représentations géométriques comprend les étapes suivantes :
- générer une image 2D (60-62) à partir d'une représentation géométrique 2D d'une géométrie de la structure physique ; ou
- générer une image volumétrique 3D ou une image multivue 3D à partir d'une représentation géométrique 3D d'une géométrie de la structure physique.

5. Procédé selon la revendication 3 ou la revendication 4, dans lequel la génération des représentations picturales (60-62, 70, 80, 90, 91) à partir des représentations géométriques comprend les étapes suivantes :
- obtenir une indication matérielle d'au moins une partie de la structure physique ; et
- coder l'indication matérielle en tant que valeur picturale de l'au moins une partie de la structure physique dans la représentation picturale.

6. Procédé selon la revendication 2, dans lequel les un ou plusieurs paramètres scalaires (SP) comprennent au moins l'un d'un groupe constitué de :
- un paramètre scalaire de conception de la partie de la machine électrique ; et
- une caractérisation de la géométrie d'une autre partie de la machine électrique.

7. Procédé mis en œuvre par ordinateur pour optimiser la géométrie d'une structure physique par rapport à au moins une mesure de performance, où la structure physique est une partie d'une machine électrique, et où l'au moins une mesure de performance comprend des charges électriques associées à la machine électrique, le procédé comprenant les étapes suivantes :
- obtenir un réseau neuronal entraîné tel qu'obtenu par le procédé selon l'une quelconque des revendications 1 à 6 ; optimiser la géométrie de la structure physique à l'aide du réseau neuronal entraîné, ladite optimisation comprenant les étapes suivantes :
i) générer (210) une représentation picturale (60) de la géométrie de la structure physique, où la représentation picturale comprend une ou plusieurs images matricielles 2D composées de pixels ou une image volumétrique 3D composée de voxels ;
ii) utiliser (220) la représentation picturale de la géométrie comme entrée du réseau neuronal entraîné (101) pour déduire une valeur de l'au moins une mesure de performance ; et
iii) sur la base de la valeur déduite (101), optimiser la géométrie de la structure physique pour obtenir une géométrie optimisée de la structure physique.

8. Procédé selon la revendication 7, comprenant en outre d'optimiser de manière itérative la géométrie de la structure physique, dans une itération de ladite optimisation itérative, en générant la représentation picturale (60) à partir de la géométrie optimisée de la structure physique qui est obtenue dans une itération précédente de l'optimisation itérative.

9. Procédé selon la revendication 7 ou la revendication 8, dans lequel l'optimisation de la géométrie comprend l'utilisation d'un algorithme génétique ou d'une optimisation basée sur le gradient.

10. Support lisible par ordinateur (500) comprenant des données transitoires ou non transitoires (510) représentant des instructions qui, lorsqu'elles sont exécutées par un système processeur, amènent le système processeur à exécuter le procédé mis en œuvre par ordinateur selon l'une quelconque des revendications 1 à 9.

11. Système (300) d'entraînement d'un réseau neuronal à utiliser pour optimiser la géométrie d'une structure physique par rapport à au moins une mesure de performance, dans lequel la structure physique est une partie d'une machine électrique, et dans lequel l'au moins une mesure de performance comprend des charges électriques associées à la machine électrique, le système comprenant :
- une interface d'entrée (320) destinée à accéder à :
- des données d'entraînement (342) comprenant une pluralité d'instances d'entraînement représentant différentes géométries de la structure physique, chaque instance d'entraînement comprenant :
- une représentation picturale d'une géométrie respective de la structure physique, où la représentation picturale comprend une ou plusieurs images matricielles 2D composées de pixels ou une image volumétrique 3D composée de voxels ;
- une valeur d'au moins une mesure de performance associée à la géométrie respective de la structure physique ;
- des données (344) définissant un réseau neuronal comprenant une pluralité de couches convolutives pour recevoir une représentation picturale respective des données d'entraînement comme entrée et une pluralité de couches denses pour générer une sortie du réseau neuronal, où la sortie du réseau neuronal comprend l'au moins une mesure de performance ; et
- un sous-système de processeur (360) configuré pour entraîner le réseau neuronal à l'aide des données d'entraînement afin d'obtenir un réseau neuronal entraîné qui est conçu pour déduire une valeur de l'au moins une mesure de performance à partir d'une représentation picturale de la géométrie de la structure physique.

12. Système (400) pour optimiser la géométrie d'une structure physique par rapport à au moins une mesure de performance, où la structure physique est une partie d'une machine électrique, et où l'au moins une mesure de performance comprend des charges électriques associées à la machine électrique, le système comprenant :
- une interface d'entrée (420) pour accéder aux données (344) définissant un réseau neuronal entraîné tel qu'obtenu par le procédé selon l'une quelconque des revendications 1 à 6 ;
- un sous-système de processeur (460) configuré pour optimiser la géométrie de la structure physique à l'aide du réseau neuronal entraîné, ladite optimisation comprenant les étapes suivantes :
i) générer une représentation picturale de la géométrie de la structure physique, où la représentation picturale comprend une ou plusieurs images matricielles 2D composées de pixels ou une image volumétrique 3D composée de voxels ;
ii) utiliser la représentation picturale de la géométrie comme entrée du réseau neuronal entraîné pour déduire une valeur de l'au moins une mesure de performance ; et
iii) sur la base de la valeur déduite, optimiser la géométrie de la structure physique pour obtenir une géométrie optimisée de la structure physique.
